# EUROPÄISCHE PATENTSCHRIFT

(11) **EP 1 515 884 B1**
(45) Veröffentlichungstag und Bekanntmachung des Hinweises auf die Patenterteilung: **05.10.2005**
(21) Anmeldenummer: 03738019.3
(22) Anmeldetag: 12.06.2003
(51) Int. Cl.: B62D 1/18, B62D 1/20, B62D 1/19

(54) **LENKSÄULENSTRANG EINES KRAFTFAHRZEUGS**
STEERING COLUMN OF A MOTOR VEHICLE
ENSEMBLE COLONNE DE DIRECTION POUR VEHICULE AUTOMOBILE

(30) Priorität: 24.06.2002 DE 10228162
(43) Veröffentlichungstag der Anmeldung: 23.03.2005
(73) Patentinhaber: DaimlerChrysler AG, 70567 Stuttgart (DE)
(72) Erfinder: RAABE, Hermann, 70794 Filderstadt (DE); STEINKIRCHNER, Peter, 71101 Schönaich (DE)
(86) Internationale Anmeldenummer: PCT/EP2003/006155
(87) Internationale Veröffentlichungsnummer: WO 2004/000625

(56) Entgegenhaltungen:
- DE-A- 3 723 034
- GB-A- 2 282 433
- US-A- 3 529 441
- US-A- 3 926 069
- US-A1- 2001 020 782

## Beschreibung

Die Erfindung betrifft einen Lenksäulenstrang eines Kraftfahrzeugs gemäß dem Oberbegriff des Patentanspruchs 1.

Ein derartiger Lenksäulenstrang ist aus der Patentschrift GB-A-2 282 433 bekannt.

Aus der DE 37 23 034 A1 ist ein weiterer Lenksäulenstrang für ein Kraftfahrzeug bekannt. Lenksäulenstränge für Kraftfahrzeuge zeichnen sich dadurch aus, dass sie mehrteilig ausgebildet sind, um bei vorgegebenen Bauraumverhältnissen das vom Lenkrad auf den Lenksäulenstrang gebrachte Drehmoment zum Lenkgetriebe zu übertragen. Dazu ist eine das Lenkrad tragende Lenkspindel mit einer zum Lenkgetriebe führenden Lenkwelle durch ein drehmomentenübertragendes Gelenk verbunden. In der Regel werden solche drehmomentenübertragenden Verbindungen durch Kreuzgelenke hergestellt, damit der Verlauf des Lenksäulenstrangs bis zum Lenkgetriebe entsprechend den vorliegenden Bauraumverhältnissen erfolgen kann. Für die Komfortverstellung des Lenkrades sowie für eine Schwingungsentkopplung vom Lenkgetriebe wird in den Lenksäulenstrang ein axial bewegliches Schwingenelement zwischengeschaltet.

Das unmittelbar hinter dem Lenkgetriebe zwischengeschaltete Schwingenelement ist in der DE 37 23 034 A1 als Einfachschwinge oder Parallelogrammschwinge ausgebildet, wobei bei beiden Ausführungen ein Koppelglied mit zwei parallelen Drehachsen vorgesehen ist, die etwa rechtwinklig zur axialen Erstreckung des Lenksäulenstrangs verlaufen.

Die Problematik derartiger Schwingenelemente liegt darin, dass in Abhängigkeit vom Umdrehungswinkel des Lenksäulenstrangs dessen Masseschwerpunkt verlagert wird und es dadurch zu unerwünschten Vibrationen des Lenkrades oder zu Rückkopplungen auf die Servolenkung kommen kann, die den Fahrkomfort beeinträchtigen.

Es ist daher Aufgabe der Erfindung, einen Lenksäulenstrang zu entwickeln, der die Nachteile des Standes der Technik vermeidet.

Die Aufgabe wird erfindungsgemäß durch die Merkmale des Patentanspruchs 1 gelöst.

Ein erfindungsgemäßer Lenksäulenstrang umfasst eine Lenkspindel, die das Lenkrad trägt, sowie eine Lenkwelle, die mit dem Lenkgetriebe verbunden ist. Die Lenkspindel und die Lenkwelle sind drehmomentenübertragend miteinander verbunden. Diese drehmomentenübertragende Verbindung wird -im Gegensatz zum Stand der Technik- nicht durch ein Kreuzgelenk gebildet, sondern durch ein Zapfenkreuz, das an dem dem Lenkrad gegenüberliegenden Ende der Lenkspindel angelenkt ist und einem Koppelglied eines Schwingenelements. Das Koppelglied und das Zapfenkreuz sind derart zueinander ausgerichtet, dass eine Achse des Zapfenkreuzes eine Drehachse des Koppelglieds bildet.

Durch die direkte Anbindung des Koppelglieds an dem Zapfenkreuz und damit am Ende der Lenkspindel schneiden sich die Längsachse der Lenkspindel und die Mittellängsachse des Koppelglieds immer in einem gemeinsamen Schnittpunkt. Bei entsprechender Anbindung der Lenkwelle an das Koppelglied kann erreicht werden, dass auch ein gemeinsamer Schnittpunkt zwischen der Drehachse der Lenkwelle und der Längsachse der Lenkspindel besteht. Der Abstand zwischen beiden Schnittpunkten wird nach Möglichkeit so gering als möglich gehalten, so dass die Krafteinleitung der Massenkräfte der Lenkwelle und des Schwingenelements eindeutig definiert werden kann. Durch die definierte Krafteinleitung können Unwuchten im Lenksäulenstrang vermieden und damit Vibrationen im Lenkrad unterbunden werden. In Abhängigkeit des gewünschten Verschiebewegs der Lenkwelle, der Montierbarkeit der Lenkwelle an das Lenkgetriebe, des unteren Kreuzgelenks zwischen Lenkwelle und Lenkgetriebe sowie der Geometrieänderung des Schwingenelements bei Lenkbewegungen wird die Länge des Koppelglieds bestimmt. Je kleiner jedoch das Koppelglied dimensioniert ist, desto kleiner ist das Blockmaß, so dass das Crashverhalten verbessert ist.

Vorteilhafte Ausgestaltungen sind den abhängigen Ansprüchen zu entnehmen.

In einer bevorzugten Ausführungsform ist das Zapfenkreuz in einer Gelenkgabel gelagert. Der Abstand zwischen den beiden Schnittpunkten kann damit weiter verkürzt werden, so dass die Taumelbewegung der Lenkwelle reduziert werden kann.

Zwei Querzapfen des Zapfenkreuzes können vorteilhafterweise einen Querbolzen des Koppelglieds bilden, wobei der Querbolzen eine der Drehachsen des Koppelglieds bildet. Dadurch kann eine platzsparende Verbindung zwischen der Lenkspindel und der Lenkwelle geschaffen werden.

Zwei Längszapfen des Zapfenkreuzes können die Schwenkachse der Gelenkgabel bilden, so dass eine radiale Verschwenkbarkeit der Lenkwelle relativ zur Lenkspindel ermöglicht wird.

Das Koppelglied kann zwei Seitenplatten umfassen, die von zwei Querbolzen durchsetzt sind. Die Querbolzen sind dabei derart mit der Lenkwelle und der Lenkspindel verbunden, dass sie die Drehachsen des Koppelglieds bilden.

Die Lenkwelle kann an ihrem der Lenkspindel zugewandten Ende einen Flansch aufweisen, der in einem Abstand zu der Längsachse der Lenkwelle endet. Je größer dieser Abstand gehalten ist, desto größer kann die Länge des Koppelglieds gestaltet sein.

Da die Drehachse der Lenkwelle und die Längsachse der Lenkwelle in der Regel nicht identisch sind, entsteht ein Hebelarm, über den eine Momenteneinleitung in die Lenkspindel, also in das Lenkrad erfolgt. Der Flansch kann mit einer Zusatzmasse versehen sein, damit ein Auswuchten des Lenksäulenstrangs in sogenannter Konstruktionslage so erfolgt, dass eine Momenteneinleitung in das Lenkrad unterbleibt. Die Konstruktionslage eines Lenksäulenstrangs ist dabei die Lage, in der sich das Fahrzeug in Geradeausfahrt befindet.

Zur Aufnahme von Verformungen kann die Lenkwelle zumindest bereichsweise Wellrohrabschnitte aufweisen.

Unabhängig davon, wie das Schwingenelement gestaltet ist, ist es für das Reduzieren der Rückkopplung auf die Servolenkung wichtig, dass sich sowohl die Achse des Gelenks, die Drehachse des Wellrohrs als auch die Mittelachse des Koppelglieds mit der Längsachse der Lenkspindel schneiden.

Eine bevorzugte Ausgestaltung der Erfindung wird anhand der Zeichnung erläutert. Dabei zeigen:
- Fig. 1: einen Lenksäulenstrang in einer perspektivischen Ansicht von der Seite,
- Fig. 2: ein Schwingenelement gemäß Fig. 1 in einer Strecklage sowie
- Fig. 3: ein Schwingenelement gemäß Fig. 1 in einer Stauchlage.

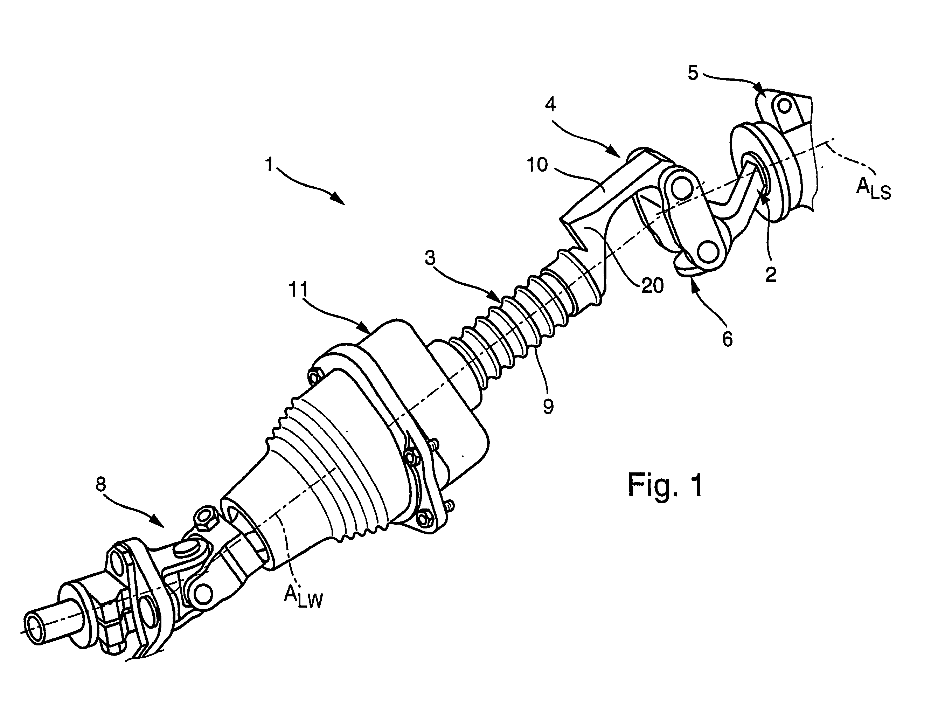

Die Darstellung in Fig. 1 zeigt einen Lenksäulenstrang 1 für ein nicht dargestelltes Kraftfahrzeug in einer perspektivischen Ansicht schräg von der Seite.

Der Lenksäulenstrang 1 umfasst eine Lenkspindel 2 sowie eine Lenkwelle 3, die über ein axial bewegliches Schwingenelement 4 miteinander verbunden sind.

Die Lenkspindel 2 nimmt an ihrem nicht weiter dargestellten, dem Fahrzeuginnenraum zugewandten Ende ein Lenkrad auf, wobei die Lenkspindel 2 in bekannter Art und Weise über ein andeutungsweise dargestelltes Mantelrohr 5 fahrzeugfest gelagert ist. Das dem Lenkrad gegenüberliegende Ende der Lenkspindel 2 ist geht hakenförmig in eine Gelenkgabel 6 über, das in einem Abstand zur Längsachse A_{LS} der Lenkspindel 2 endet.

Die Lenkwelle 3 steht an ihrem unteren, dem Motorraum zugewandten Ende über ein Kreuzgelenk 8 mit dem nicht weiter dargestellten Lenkgetriebe in Verbindung. Der obere Bereich der Lenkwelle 3 wird durch einen Wellrohrabschnitt 9 gebildet, an den sich ein Flansch 10 anschließt. Der Flansch 10 erstreckt sich von dem Wellrohrabschnitt 9 derart, dass er in einem Abstand zur Achse der Lenkwelle A_{LW} endet. Am unteren Ende des Wellrohrabschnitts 9 schließt sich eine Dichtmanschette 11 an, die den Lenksäulenstrang 1 bei der Durchführung durch eine nicht dargestellte Stirnwand abdichtet.

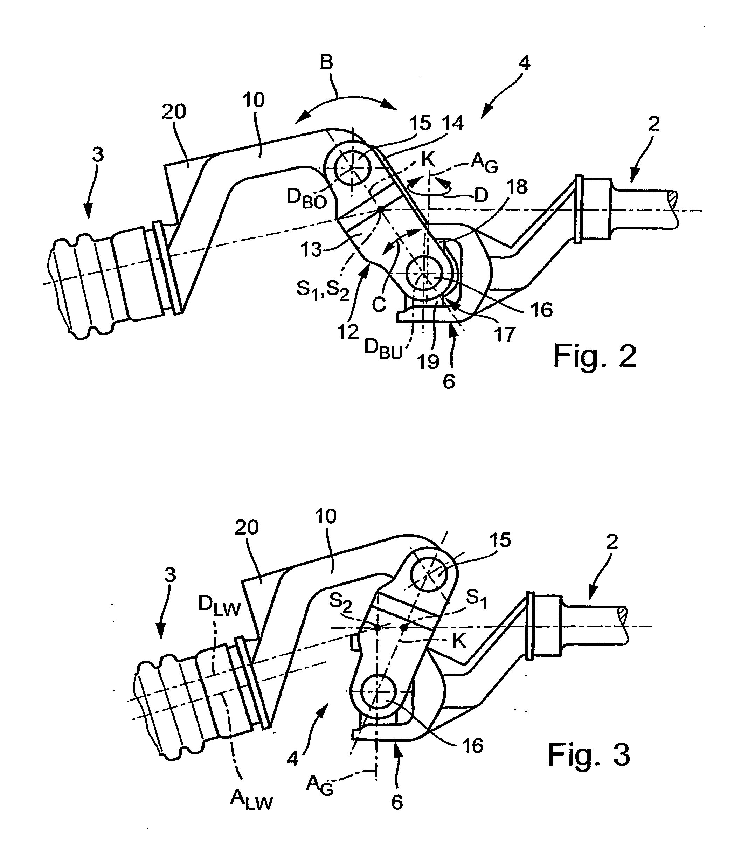

Das Schwingenelement 4 und dessen Wirkungsweise wird im folgenden anhand von Fig. 2 und 3 näher erläutert.

Das Schwingenelement 4 umfasst ein Koppelglied 12, das etwa H-förmig gestaltet ist. Die zwei parallel zueinander verlaufenden Seitenplatten 13 und 14 des Koppelglieds 12 werden an ihrem oberen und an ihrem unteren Ende von zwei Querbolzen 15 und 16 durchsetzt.

Der obere Querbolzen 15 ist mit dem Flansch 10 der Lenkwelle 3 gelenkig verbunden, so dass der Flansch 10 eine Schwenkbewegung gemäß Pfeilrichtung B um die durch den Querbolzen 15 gebildete Drehachse D_{BO} ausführen kann.

Der untere Querbolzen 16 bildet zwei sich gegenüberliegende Querzapfen eines Zapfenkreuzes 17 und ist gelenkig mit dem Koppelglied 12 verbunden, so dass das Koppelglied 12 eine Schwenkbewegung gemäß Pfeilrichtung C um die durch den Querbolzen 16 gebildete Drehachse D_{BU} ausführen kann. Die beiden Längszapfen 18 und 19 des Zapfenkreuzes 17 bilden die Achse A_{G} der Gelenkgabel 6, so dass die Lenkwelle 3 radial gemäß Pfeilrichtung D um die Achse AG der Gelenkgabel 6 verschwenkt werden kann.

In Abhängigkeit von der Dimensionierung des Lenksäulenstrangs 1 wird eine Zusatzmasse 20 dem Flansch 10 vorgesehen, um den Lenksäulenstrang 1 für die Rotationsbewegung auszuwuchten. Die Positionierung und die Größe der Zusatzmasse 20 wird auf die erzeugten Vibrationen im Lenkrad so abgestimmt, dass eine Reduzierung dieser erfolgt. Die Zusatzmasse 20 sollte so angeordnet sein, dass sich durch entsprechende Masseverteilung der Gesamtschwerpunkt von Lenkwelle 3 und Schwingenelement 4 auf der Drehachse D_{LW} der Lenkwelle 3 befindet.

Durch das erfindungsgemäße Koppelglied 12 und dessen Anbindung an die Lenkspindel 2 bzw. Lenkwelle 3 lässt sich der Lenksäulenstrang 1 in axialer Richtung zusammenschieben, wobei zusätzlich die Lenkwelle 3 radial zur Lenkspindel 2 verschwenkbar ist.

Wenn also beispielsweise bei der Lenkradverstellung in Längsrichtung oder bei Schwingungen, die vom Lenkgetriebe auf den Lenksäulenstrang übertragen werden, ein axialer Längenausgleich erforderlich ist, wird dieser durch Auslenkung des Koppelglieds 12 um dessen Mittellinie K gemäß Pfeilrichtung C erreicht, wobei die Schwenkachse des Koppelglieds 12 durch die Drehachse D_{BU} des unteren Bolzens festgelegt ist.

Durch die erfindungsgemäße Ausgestaltung des drehmomentenübertragenden Schwingenelements 4 wird erreicht, dass die Längsachse A_{LS} der Lenkspindel 2 das Koppelglied 12 etwa in dessen Mittellinie K in einem Schnittpunkt S₁ schneidet. In Konstruktionslage des Lenksäulenstrangs 1 ist die Drehachse D_{LW} der Lenkwelle 3, die nicht identisch sein muss mit der Längsachse A_{LW} der Lenkwelle 3, so ausgerichtet, dass ein gemeinsamer Schnittpunkt S₂ mit der Längsachse A_{LS} der Lenkspindel 2 entsteht. Beide Schnittpunkte liegen optimalerweiser so nah wie möglich beieinander, um den Hebelarm von Massekräften zu verkürzen. Damit werden die in die Lenkspindel 2 eingeleiteten Momente reduziert, so dass Vibrationen des Lenkrads unterbunden werden.

Im Crashfall wird infolge von Stirnwandintrusionen die Lenkspindel 2 erst sehr spät mit hohen Kräften beaufschlagt, so dass sich zuerst des Schwingenelement 4 zusammenfaltet. Erst wenn das Schwingenelement 4 vollständig zusammengefaltet ist, d.h. die Blockbildung erreicht ist, verformt sich der untere Wellrohrabschnitt 9. Bei entsprechend zur Verfügung stehenden Bauraum kann auch die Lenkspindel 2 mit einem zusätzlichen Wellrohrabschnitt versehen sein. Dadurch kann dann unter anderem sichergestellt werden, dass in allen Crashsituationen ein zusätzlicher Deformationsweg zur Verfügung gestellt wird. D.h. unabhängig von welcher Richtung, also seitens des Lenkrads oder des Lenkgetriebes, die Krafteinleitung einsetzt, hat das Schwingenelement 4 die Möglichkeit sich in jede Richtung zusammenzufalten.

## Patentansprüche

1. Lenksäulenstrang für ein Kraftfahrzeug mit einer ein Lenkrad tragenden Lenkspindel, die mit einer Lenkwelle verbunden ist, wobei die Verbindung zwischen der Lenkspindel und der Lenkwelle durch ein drehmomentenübertragendes Gelenk gebildet ist, und mit einem axial beweglichen Schwingenelement zum axialen Längenausgleich, wobei das Schwingenelement zumindest ein Koppelglied mit zwei parallelen Drehachsen umfasst, wobei an dem dem Lenkrad gegenüberliegenden Ende der Lenkspindel ein Zapfenkreuz angelenkt ist, wobei eine Achse des Zapfenkreuzes eine Drehachse des Koppelglieds bildet,
**dadurch gekennzeichnet,**
**dass** die Lenkwelle (3) einen Flansch (10) aufweist, der in einem Abstand zu der Längsachse (A_{LW}) der Lenkwelle (3) endet, wobei der Flansch (10) eine Schwenkbewegung um die obere Drehachse(D_{BO}) des Koppelglieds (12) ausführt.

2. Lenksäulenstrang nach Anspruch 1,
**dadurch gekennzeichnet,**
**dass** das Zapfenkreuz (17) in einer Gelenkgabel (6) gelagert ist, das am dem Lenkrad gegenüberliegenden Ende der Lenkspindel (2) angeordnet ist.

3. Lenksäulenstrang nach Anspruch 2,
**dadurch gekennzeichnet,**
**dass** zwei Querzapfen des Zapfenkreuzes (17) einen Querbolzen (16) des Koppelglieds (12) bilden.

4. Lenksäulenstrang nach Anspruch 3,
**dadurch gekennzeichnet,**
**dass** zwei Längszapfen (18, 19) des Zapfenkreuzes (17) eine Schwenkachse (A_{G}) der Gelenkgabel (6) bilden.

5. Lenksäulenstrang nach Anspruch 4,
**dadurch gekennzeichnet,**
**dass** das Koppelglied (12) zwei Seitenplatten (13, 14) umfasst, die von zwei Querbolzen (15, 16) durchsetzt sind, wobei die Querbolzen (15, 16) die Drehachsen (D_{BU}, D_{BO}) des Koppelglieds (12) bilden.

6. Lenksäulenstrang nach einem der Ansprüche 1 bis 5,
**dadurch gekennzeichnet,**
**dass** der Flansch (10) mit einer Zusatzmasse (20) versehen ist

7. Lenksäulenstrang nach Anspruch 7,
**dadurch gekennzeichnet,**
**dass** die Lenkwelle (3) mit einem Wellrohrabschnitt (9) ausgebildet ist.

## Claims

1. A steering column train for a motor vehicle having a steering gear shaft which bears a steering wheel and which is connected to a rocker shaft, the connection between the steering gear shaft and the rocker shaft taking the form of a torque-transmitting joint, and having an axially moving vibration element for axial length adjustment, the vibration element comprising at least a coupling member with two parallel axes of rotation, a cross-key being coupled to the end of the steering gear shaft opposite the steering wheel and one axis of the cross-key forming an axis of rotation of the coupling member,
**characterised in that**
the rocker shaft (3) has a flange (10) which ends a certain distance from the longitudinal axis (A_{LW}) of the rocker shaft (3), the flange (10) describing a pivoting movement about the upper axis of rotation (D_{BO}) of the coupling member (12).

2. A steering column train in accordance with claim 1,
**characterised in that**
the cross-key (17) is mounted in a joint fork (6) which is positioned on the end of the steering gear shaft (2) opposite the steering wheel.

3. A steering column train in accordance with claim 2,
**characterised in that**
two transverse pins of the cross-key (17) form a transverse bolt (16) of the coupling member (12).

4. A steering column train in accordance with claim 3,
**characterised in that**
two longitudinal pins (18, 19) of the cross-key (17) form an axis of pivoting (A_{G}) of the joint fork (6).

5. A steering column train in accordance with claim 4,
**characterised in that**
the coupling member (12) comprises two lateral plates (13, 14) through which pass two transverse bolts (15, 16), said transverse bolts (15, 16) forming the axes of rotation (D_{BU}, D_{BO}) of the coupling member (12).

6. A steering column train in accordance with one of claims 1 to 5,
**characterised in that**
the flange (10) is provided with an additional mass (20).

7. A steering column train in accordance with claim 6,
**characterised in that**
the rocker shaft (3) is designed with a corrugated tube section (9).

## Revendications

1. Ensemble de colonne de direction pour un véhicule automobile avec un arbre de colonne de direction portant un volant, qui est relié à un arbre de direction, sachant que la liaison entre l'arbre de colonne de direction et l'arbre de direction est formée par une rotule transmettant le couple, et avec un élément de bras oscillant mobile axialement pour la compensation axiale de longueur, sachant que l'élément de bras oscillant comprend au moins un élément d'accouplement avec deux axes de rotation parallèles, sachant que, sur l'extrémité opposée au volant de l'arbre de direction est articulée une croix de tourillons, dans laquelle un axe de la croix de tourillons forme un axe de rotation de l'élément d'accouplement, **caractérisé en ce que** l'arbre de direction (3) comporte une bride (10) qui se termine à une distance de l'axe longitudinal (A_{LW}) de l'arbre de direction (3), sachant que la bride (10) effectue un mouvement de basculement autour de l'axe supérieur (D_{BO}) de l'élément d'accouplement (12).

2. Ensemble de colonne de direction selon la revendication 1, **caractérisé en ce que** la croix de tourillons (17) est montée dans une chape (6), qui est disposée à l'extrémité de l'arbre de colonne de direction (2) opposée au volant.

3. Ensemble de colonne de direction selon la revendication 2, **caractérisé en ce que** deux tourillons transversaux de la croix de tourillons (17) forment un axe transversal (16) de l'élément d'accouplement (12).

4. Ensemble de colonne de direction selon la revendication 3, **caractérisé en ce que** deux tourillons longitudinaux (18, 19) de la croix de tourillons (17) forment un axe de basculement (A_{G}) de la chape (6).

5. Ensemble de colonne de direction selon la revendication 4, **caractérisé en ce que** l'élément d'accouplement (12) comprend deux plaques latérales (13, 14) qui sont traversées par deux axes transversaux (15, 16), sachant que les axes transversaux (15, 16) forment les axes de rotation (D_{BU}, D_{BO}) de l'élément d'accouplement (12).

6. Ensemble de colonne de direction selon l'une des revendications 1 à 5, **caractérisé en ce que** la bride (10) est dotée d'une masse supplémentaire (20).

7. Ensemble de colonne de direction selon la revendication 7, **caractérisé en ce que** l'arbre de direction (3) est formé avec un tronçon de tube ondulé (9).
